# EUROPEAN PATENT APPLICATION

(11) **EP 2 442 240 A1**
(43) Date of publication of application: **18.04.2012**
(21) Application number: 11005774.2
(22) Date of filing: 14.07.2011
(51) Int. Cl.: G06F 17/30

(54) **Mobile terminal and method for controlling the same**

(30) Priority: 19.07.2010 KR 20100069367
(71) Applicant: LG Electronics Inc., Seoul 150-721 (KR)
(72) Inventor: Roh, Hyeongseok, Seoul 153-801 (KR); Kim, Hoisun, Seoul 153-801 (KR)
(74) Representative: Beyer, Andreas

(57) **Abstract**

A mobile terminal and a method for controlling the same are disclosed. The mobile terminal may include a wireless communication interface for retrieving web content, a display for displaying a web browser that includes at least one input windows, an input device that receives an input string for input in the at least one input window, and a controller configured to adjust a display of the input string input to fully display the input string. The controller may determine a length of the at least one input window and the input string. If the length of the input string is greater than the length of the at least one input window, the controller may increase the length of the at least one input window or generate a display of the input string in an area outside of the selected input window.

## Description

### BACKGROUND

### 1. Field

The present disclosure relates to a mobile terminal and, more particularly, to a mobile terminal and a method for controlling the same that allow the user to conveniently input and verify data through various types of input windows provided in a web browser.

### 2. Background

A terminal (or user equipment) may be categorized as a mobile/portable terminal and a stationary terminal depending upon the mobility of the terminal. The terminal may also be categorized as a handheld terminal or a vehicle mount terminal depending upon whether or not the terminal can be carried (i.e., portable) by the user.

As described above, as the functions of the terminal is diversified, the terminal may be embodied in the form of a multimedia player performing multiple functions, such as taking pictures or recording (or filming) moving pictures, playing-back music files or moving picture files, playing games, receiving broadcast programs, and so on.

In order to support and enhance such diverse functions of the terminal, the issue of improving and enhancing the structural aspects and/or the software of the terminal may be taken into consideration.

With the recent improvement in wireless data communication functions and data processing capability of mobile terminals, the use of the Internet through mobile terminals is increasing. Accordingly, a method for conveniently inputting and verifying data through various types of selected input windows, which are provided in a web browser, is being requested.

Accordingly, the present disclosure is directed to a mobile terminal and a method for controlling the same that substantially obviate one or more problems due to limitations and disadvantages of the related art. One object of the present disclosure is to provide a mobile terminal and a method for controlling the same that can enable the user to conveniently input and verify data through various types of input windows provided in a web browser.

### BRIEF DESCRIPTION OF THE DRAWINGS

The embodiments will be described in detail with reference to the following drawings in which like reference numerals refer to like elements wherein:

Figure 1 illustrates a block diagram of a mobile terminal according to an embodiment of the present disclosure;

Figure 2 illustrates a front perspective view of a mobile terminal according to an embodiment of the present disclosure;

Figure 3 illustrates a front view of a mobile terminal for describing an operation of the mobile terminal according to the present disclosure;

Figure 4 illustrates an exemplary format of a selected input window that is provided or displayed in a web browser according to the present disclosure;

Figures 5A and 5B illustrate a limited display of an input string due to a limited size of a selected input window according to the present disclosure;

Figures 6A and 6B illustrate an exemplary method of verifying an input string, which exceeds the size of a selected input window, from the selected input window according to an embodiment of the present disclosure;

Figures 7A to 7D illustrate an exemplary method of verifying an input string, which exceeds the size of a selected input window, from the selected input window through a pop-up window according to an embodiment of the present disclosure;

Figure 8 is a flowchart of a method of controlling a display on the mobile terminal according to an embodiment of the present disclosure;

Figure 9 illustrates an exemplary format of a pop-up window including a virtual keypad for inputting an input string, which exceeds the size of a selected input window, to the selected input window according to an embodiment of the present disclosure;

Figures 10A and 10B illustrate an exemplary method for changing the size of a selected input window according to an embodiment of the present disclosure;

Figures 11A and 11B illustrate an exemplary method for changing the size of a selected input window based upon a prescribed condition according to an embodiment of the present disclosure;

Figures 12A to 12C illustrate another exemplary method for changing the size of a selected input window based upon a predetermined condition according to an embodiment of the present disclosure; and

Figures 13A to 13C illustrate an exemplary method for displaying an input string according to an embodiment of the present disclosure.

### DETAILED DESCRIPTION

Reference will now be made in detail to the embodiments of the present disclosure, examples of which are illustrated in the accompanying drawings. Wherever possible, the same reference numbers will be used throughout the drawings to refer to the same or like parts.

As used herein, the suffixes 'module', 'unit' and 'part' are used for elements in order to facilitate the disclosure only. Therefore, significant meanings or roles are not given to the suffixes themselves and it is understood that the 'module', 'unit' and 'part' can be used together or interchangeably.

The present disclosure can be applicable to a various types of terminals. Examples of such terminals include mobile as well as stationary terminals, such as mobile phones, user equipment, smart phones, DTV, computers, digital broadcast terminals, personal digital assistants, portable multimedia players (PMP) and navigators. However, by way of non-limiting example only, further description will be with regard to a mobile terminal 100, and it should be noted that such teachings may apply equally to other types of terminals.

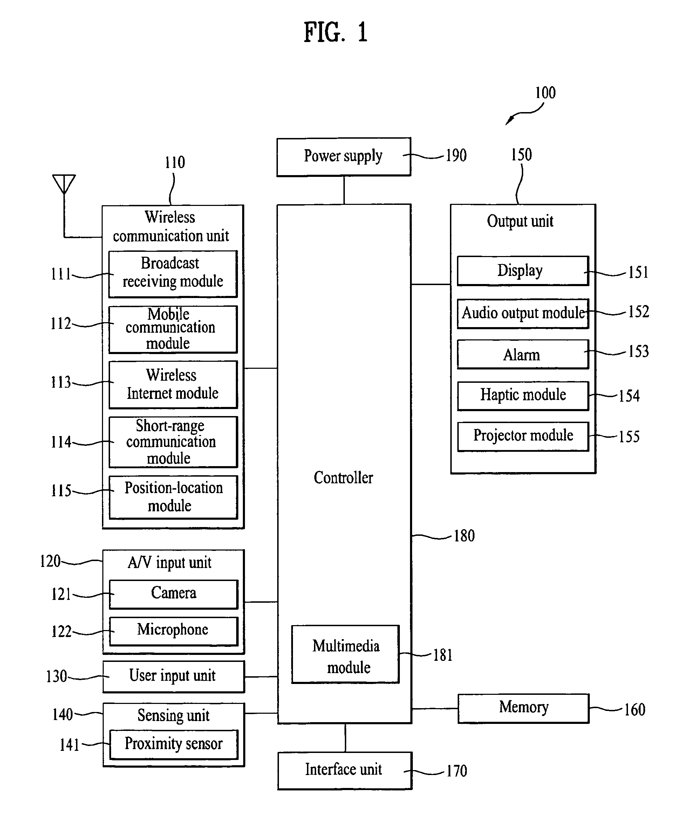

Figure 1 is a block diagram of a mobile terminal 100 in accordance with an embodiment of the present disclosure. Figure 1 shows the mobile terminal 100 according to one embodiment of the present disclosure includes a wireless communication unit 110, an A/V (audio/video) input unit 120, a user input unit 130, a sensing unit 140, an output unit 150, a memory 160, an interface unit 170, a controller 180, a power supply unit 190 and the like. Figure 1 shows the mobile terminal 100 having various components, but it should be understood that implementing all of the illustrated components is not a requirement. Greater or fewer components may alternatively be implemented.

The wireless communication unit 110 may include one or more components which permits wireless communication between the mobile terminal 100 and a wireless communication system or network within which the mobile terminal 100 is located. For instance, the wireless communication unit 110 can include a broadcast receiving module 111, a mobile communication module 112, a wireless internet module 113, a short-range communication module 114, a position-location module 115, and the like.

The broadcast receiving module 111 may receive a broadcast signal and/or broadcast associated information from an external broadcast managing server via a broadcast channel. The broadcast channel may include a satellite channel and a terrestrial channel.

The broadcast managing server may refer to a server which generates and transmits a broadcast signal and/or broadcast associated information or a server which is provided with a previously generated broadcast signal and/or broadcast associated information. The broadcast managing server may then transmit the provided signal or information to a terminal. The broadcast signal may be implemented as a TV broadcast signal, a radio broadcast signal, or a data broadcast signal, among others. If desired, the broadcast signal may further include a broadcast signal combined with a TV or radio broadcast signal.

The broadcast associated information may include information associated with a broadcast channel, a broadcast program, a broadcast service provider, etc. And, the broadcast associated information can be provided via a mobile communication network. In this case, the broadcast associated information can be received by the mobile communication module 112.

The broadcast associated information can be implemented in various forms. For instance, broadcast associated information may include an electronic program guide (EPG) of digital multimedia broadcasting (DMB) and electronic service guide (ESG) of digital video broadcast-handheld (DVB-H).

The broadcast receiving module 111 may be configured to receive broadcast signals transmitted from various types of broadcast systems. By nonlimiting example, such broadcasting systems may include digital multimedia broadcasting-terrestrial (DMB-T), digital multimedia broadcasting-satellite (DMB-S), digital video broadcast-handheld (DVB-H), the data broadcasting system known as media forward link only (MediaFLO®), and integrated services digital broadcast-terrestrial (ISDB-T), or the like. Optionally, the broadcast receiving module 111 can be configured suitable for other broadcasting systems as well as the above-explained digital broadcasting systems.

The broadcast signal and/or broadcast associated information received by the broadcast receiving module 111 may be stored in a suitable device, such as a memory 160.

The mobile communication module 112 may transmit/receive wireless signals to/from one or more network entities (e.g., base station, external terminal, server, etc.). Such wireless signals may represent audio, video, and/or data according to, for example, transceived text/multimedia messages, among others.

The wireless internet module 113 supports Internet access for the mobile terminal 100. This module may be internally or externally coupled to the mobile terminal 100. In this case, the wireless Internet technology can include WLAN(Wireless LAN) (Wi-Fi), Wibro (Wireless broadband), Wimax (World Interoperability for Microwave Access), HSDPA(High Speed Downlink Packet Access), etc.

The short-range communication module 114 facilitates relatively short-range communications. Suitable technologies for implementing this module include radio frequency identification (RFID), infrared data association (IrDA), ultra-wideband (UWB), as well at the networking technologies commonly referred to as Bluetooth and ZigBee, to name a few.

The position-location module 115 may identify or otherwise obtain the location of the mobile terminal 100. If desired, this module may be implemented with a global positioning system (GPS) module.

Referring to Figure 1, the audio/video (A/V) input unit 120 may be configured to provide audio or video signal input to the mobile terminal 100. As shown, the A/V input unit 120 may include a camera 121 and a microphone 122. The camera 121 may receive and process image frames of still pictures or video, which are obtained by an image sensor in a video call mode or a photographing mode. And, the processed image frames can be displayed on the display 151.

The image frames processed by the camera 121 can be stored in the memory 160 or can be externally transmitted via the wireless communication unit 110. Optionally, at least two cameras 121 can be provided to the mobile terminal 100 according to environment of usage.

The microphone 122 may receive an external audio signal while the portable device is in a particular mode, such as phone call mode, recording mode or a mode that requires voice recognition. This audio signal may be processed and converted into electric audio data. The processed audio data may be transformed into a format transmittable to a mobile communication base station via the mobile communication module 112 in case of a call mode. The microphone 122 may include assorted noise removing algorithms to remove noise generated in the course of receiving the external audio signal.

The user input unit 130 may generate input data responsive to user manipulation of an associated input device or devices. Examples of such devices include a keypad, a dome switch, a touchpad (e.g., static pressure/capacitance), a jog wheel, a jog switch, etc.

The sensing unit 140 may provide sensing signals to control operations of the mobile terminal 100 using status measurements of various aspects of the mobile terminal. For instance, the sensing unit 140 may detect an open/close status of the mobile terminal 100, relative positioning of components (e.g., a display and keypad) of the mobile terminal 100, a change of position of the mobile terminal 100 or a component of the mobile terminal 100, a presence or absence of user contact with the mobile terminal 100, orientation or acceleration/deceleration of the mobile terminal 100.

As an example, consider the mobile terminal 100 being configured as a slide-type mobile terminal. In this configuration, the sensing unit 140 may sense whether a sliding portion of the mobile terminal is open or closed. Other examples include the sensing unit 140 sensing the presence or absence of power provided by the power supply 190, the presence or absence of a coupling or other connection between the interface unit 170 and an external device. And, the sensing unit 140 can include a proximity sensor 141. Moreover, the sensing unit 140 may include one or more sensors.

The output unit 150 may generate outputs relevant to the senses of sight, hearing, touch, and the like. And, the output unit 150 may include the display 151, an audio output module 152, an alarm unit 153, a haptic module 154, a projector module 155, and the like.

The display 151 may be implemented to visually display (output) information associated with the mobile terminal 100. For instance, if the mobile terminal is operating in a phone call mode, the display may provide a user interface (UI) or graphical user interface (GUI) which includes information associated with placing, conducting, or terminating a phone call. As another example, if the mobile terminal 100 is in a video call mode or a photographing mode, the display 151 may additionally or alternatively display images which are associated with these modes, the UI, or the GUI.

The display module 151 may be implemented using various display technologies including, for example, a liquid crystal display (LCD), a thin film transistor-liquid crystal display (TFT-LCD), an organic light-emitting diode display (OLED), a flexible display, and a three-dimensional display, or another appropriate type of display. The mobile terminal 100 may include one or more of such displays.

Some of the above displays can be implemented in a transparent or optical transmissive type, which can be named a transparent display. As a representative example for the transparent display, there is TOLED (transparent OLED), or the like. A rear configuration of the display 151 can be implemented in the optical transmissive type as well. In this configuration, a user may be able to see an object in rear of a terminal body via the area occupied by the display 151 of the terminal body.

At least two displays 151 can be provided to the mobile terminal 100 in accordance with the implemented configuration of the mobile terminal 100. For instance, a plurality of displays can be arranged on a single face of the mobile terminal 100 in a manner of being spaced apart from each other or being built in one body. Alternatively, a plurality of displays can be arranged on different faces of the mobile terminal 100.

In case the display 151 and a sensor for detecting a touch action (hereinafter called 'touch sensor') are configured to have a mutual layer structure (hereinafter called 'touchscreen'), it is able to use the display 151 as an input device as well as an output device. In this case, the touch sensor can be configured as a touch film, a touch sheet, a touchpad, or the like.

The touch sensor can be configured to convert a pressure applied to a specific portion of the display 151 or a variation of a capacitance generated from a specific portion of the display 151 to an electric input signal. Moreover, the touch sensor may be configured to detect a pressure of a touch as well as a touched position or size.

If a touch input is made to the touch sensor, signal(s) corresponding to the touch may be transferred to a touch controller. The touch controller may process the signal(s) and then transfers the processed signal(s) to the controller 180. Therefore, the controller 180 is able to detect whether a prescribed portion of the display 151 is touched.

Referring to Figure 1, a proximity sensor can be provided to an internal area of the mobile terminal 100 enclosed by the touchscreen or around the touchscreen. The proximity sensor may detect a presence or non-presence of an object approaching a prescribed detecting surface or an object existing around the proximity sensor using an electromagnetic field strength or infrared ray without mechanical contact. Hence, the proximity sensor may have improved durability than that of a contact type sensor and also may have additional utility than that of the contact type sensor.

The proximity sensor can include one of a transmissive photoelectric sensor, a direct reflective photoelectric sensor, a mirror reflective photoelectric sensor, a radio frequency oscillation proximity sensor, an electrostatic capacity proximity sensor, a magnetic proximity sensor, an infrared proximity sensor, and the like. In case the touchscreen includes the electrostatic capacity proximity sensor, it may be configured to detect the proximity of a pointer using a variation of electric field according to the proximity of the pointer. In this case, the touchscreen (touch sensor) can be classified as a proximity sensor.

In the following description, for clarity, an action that a pointer approaches without contacting with the touchscreen to be recognized as located on the touchscreen is named 'proximity touch.' And, an action that a pointer actually touches the touchscreen is named 'contact touch.' Moreover, the position on the touchscreen proximity-touched by the pointer is the position of the pointer which vertically opposes the touchscreen when the pointer performs the proximity touch.

The proximity sensor may detect a proximity touch and a proximity touch pattern (e.g., a proximity touch distance, a proximity touch duration, a proximity touch position, a proximity touch shift state, etc.). And, information corresponding to the detected proximity touch action and the detected proximity touch pattern can be outputted to the touchscreen.

The audio output module 152 may function in various modes including a call-receiving mode, a call-placing mode, a recording mode, a voice recognition mode, a broadcast reception mode, and the like, to output audio data which is received from the wireless communication unit 110 or is stored in the memory 160. During operation, the audio output module 152 may output audio relating to a particular function (e.g., call received, message received, etc.). The audio output module 152 may be implemented using one or more speakers, buzzers, or other appropriate type of audio producing devices, and combinations thereof.

The alarm unit 153 may output a signal to announce the occurrence of a particular event associated with the mobile terminal 100. Typical events may include a call received event, a message received event, or a touch input received event. The alarm unit 153 may output a signal for announcing the event occurrence by way of vibration as well as video or audio signal. The video or audio signal can be outputted via the display 151 or the audio output unit 152. Hence, the display 151 or the audio output module 152 can be regarded as a part of the alarm unit 153.

The haptic module 154 may generate various tactile effects that can be sensed by a user. Vibration is a representative one of the tactile effects generated by the haptic module 154. Strength and pattern of the vibration generated by the haptic module 154 may be controlled to vary. For instance, different vibrations can be outputted in a manner of being synthesized together or can be outputted in sequence.

The haptic module 154 is able to generate various tactile effects as well as the vibration. For instance, the haptic module 154 may generate the effect attributed to the arrangement of pins vertically moving against a contact skin surface, the effect attributed to the injection/suction power of air though an injection/suction hole, the effect attributed to the skim over a skin surface, the effect attributed to the contact with electrode, the effect attributed to the electrostatic force, the effect attributed to the representation of hold/cold sense using an endothermic or exothermic device, and the like.

The haptic module 154 can be implemented to enable a user to sense the tactile effect through a muscle sense of finger, arm, or the like, as well as to transfer the tactile effect through a direct contact. Optionally, at least two haptic modules 154 can be provided to the mobile terminal 100 in accordance with the corresponding configuration type of the mobile terminal 100.

The projector module 155 may perform an image projector function using the mobile terminal 100. And, the projector module 155 may display an image, which is identical to or partially different at least from the image displayed on the display 151, on an external screen or wall according to a control signal of the controller 180.

In particular, the projector module 155 can include a light source to generate light (e.g., laser) that projects an image externally, an image producing means for producing an image to output externally using the light generated from the light source, and a lens for enlarging to output the image externally in a predetermined focus distance. And, the projector module 155 can further include a device that adjusts an image projected direction by mechanically moving the lens or the whole module.

The projector module 155 can be classified into a CRT (cathode ray tube) module, an LCD (liquid crystal display) module, a DLP (digital light processing) module, or the like, according to a device type of a display means. In particular, the DLP module may be operated by the mechanism of enabling the light generated from the light source to reflect on a DMD (digital micro-mirror device) chip and can be advantageous for downsizing of the projector module 151.

Preferably, the projector module 155 can be provided in a length direction of a lateral, front, or backside direction of the mobile terminal 100. And, it is understood that the projector module 155 can be provided to any portion of the mobile terminal 100 according to the necessity thereof.

The memory unit 160 may be used to store various types of data to support the processing, control, and storage requirements of the mobile terminal 100. Examples of such data include program instructions for applications operating on the mobile terminal 100, contact data, phonebook data, messages, audio, still pictures, moving pictures, etc. And, a recent use history or a cumulative use frequency of each data (e.g., use frequency for each phonebook, each message or each multimedia) can be stored in the memory unit 160. Moreover, data for various patterns of vibration and/or sound outputted in case of a touch input to the touchscreen can be stored in the memory unit 160.

The memory 160 may be implemented using any type or combination of suitable volatile and/or non-volatile memory or storage devices including hard disk, random access memory (RAM), static random access memory (SRAM), electrically erasable programmable read-only memory (EEPROM), erasable programmable read-only memory (EPROM), programmable read-only memory (PROM), read-only memory (ROM), magnetic memory, flash memory, magnetic or optical disk, multimedia card micro type memory, card-type memory (e.g., SD memory, XD memory, etc.), or other similar memory or data storage device. And, the mobile terminal 100 may operate in association with a web storage for performing a storage function of the memory 160 on Internet.

The interface unit 170 may be implemented to couple the mobile terminal 100 with external devices. The interface unit 170 may receive data from the external devices or may be supplied with the power, and then may transfer the data or power to the respective elements of the mobile terminal 100 or enables data within the mobile terminal 100 to be transferred to the external devices. The interface unit 170 may be configured using a wired/wireless headset port, an external charger port, a wired/wireless data port, a memory card port, a port for coupling to a device having an identity module, audio input/output ports, video input/output ports, an earphone port, and/or the like.

The identity module is the chip for storing various kinds of information for authenticating a use authority of the mobile terminal 100 and can include User Identify Module (UIM), Subscriber Identify Module (SIM), Universal Subscriber Identity Module (USIM), and/or the like. A device having the identity module (hereinafter called 'identity device') can be provided in the form of a smart card. Therefore, the identity device may be connectible to the mobile terminal 100 via the corresponding port.

When the mobile terminal 110 is connected to an external cradle, the interface unit 170 becomes a passage to supply the mobile terminal 100 with power from the cradle or a passage to deliver various command signals inputted from the cradle by a user to the mobile terminal 100. Each of the various command signals inputted from the cradle or the power can operate as a signal enabling the mobile terminal 100 to recognize that it is correctly loaded in the cradle.

The controller 180 may control the overall operations of the mobile terminal 100. For example, the controller 180 performs the control and processing associated with voice calls, data communications, video calls, etc. The controller 180 may include a multimedia module 181 that provides multimedia playback. The multimedia module 181 may be configured as part of the controller 180, or implemented as a separate component. Moreover, the controller 180 is able to perform a pattern recognizing process for recognizing a writing input and a picture drawing input carried out on the touchscreen as characters or images, respectively.

The power supply unit 190 may provide power required by the various components for the mobile terminal 100. The power may be internal power, external power, or combinations thereof.

Various embodiments described herein may be implemented in a computer-readable medium using, for example, computer software, hardware, or some combination thereof. For a hardware implementation, the embodiments described herein may be implemented within one or more application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, other electronic units designed to perform the functions described herein, or a selective combination thereof. Such embodiments may also be implemented by the controller 180.

For a software implementation, the embodiments described herein may be implemented with separate software modules, such as procedures and functions, each of which perform one or more of the functions and operations described herein. The software codes can be implemented with a software application written in any suitable programming language and may be stored in memory such as the memory 160, and executed by a controller or processor, such as the controller 180.

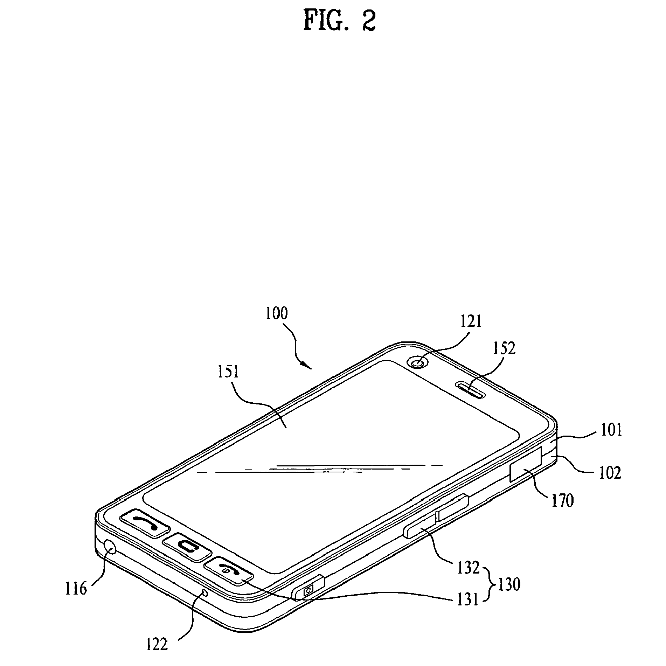

Figure 2 is a front perspective diagram of a mobile terminal according to one embodiment of the present disclosure. The mobile terminal 100 shown in Figure 2 has a bar type terminal body. Yet, the mobile terminal 100 may be implemented in a variety of different configurations. Examples of such configurations include folder-type, slide-type, rotational-type, swing-type and combinations thereof. Simply for ease of description, further disclosure will primarily relate to a bar-type mobile terminal 100. However, such teachings apply equally to other types of mobile terminals.

Referring to Figure 2, the mobile terminal 100 may include a case (casing, housing, cover, etc.) configuring an exterior thereof. In the present embodiment, the case can be divided into a front case 101 and a rear case 102. Various electric/electronic parts may be loaded in a space provided between the front and rear cases 101 and 102. Optionally, at least one middle case can be further provided between the front and rear cases 101 and 102. The cases 101 and 102 may be formed by injection molding of synthetic resin or can be formed of metal substance such as stainless steel (STS), titanium (Ti), or the like.

A display 151, an audio output unit 152, a camera 121, user input units 130 (e.g., 131 and 132), a microphone 122, an interface 170 and the like can be provided on the terminal body, for example, to the front case 101.

The display 151 may occupy most of a main face of the front case 101. The audio output unit 151 and the camera 121 may be provided an area adjacent to one of both end portions of the display 151, while the user input unit 131 and the microphone 122 may be provided at another area adjacent to the other end portion of the display 151. The user input unit 132 and the interface 170 can be provided on lateral sides of the front and rear cases 101 and 102.

The input unit 130 may be manipulated to receive a command for controlling an operation of the terminal 100. And, the input unit 130 may include a plurality of manipulating units 131 and 132. The manipulating units 131 and 132 can be referred to as a manipulating portion and may adopt any mechanism of a tactile manner that enables a user to perform a manipulation action by experiencing a tactile feeling.

Content inputted by the first or second manipulating unit 131 or 132 can be diversely set. For instance, such a command as start, end, scroll, and the like, may be inputted to the first manipulating unit 131. And, a command for a volume adjustment of sound outputted from the audio output unit 152, a command for a switching to a touch recognizing mode of the display 151, or the like, can be inputted to the second manipulating unit 132.

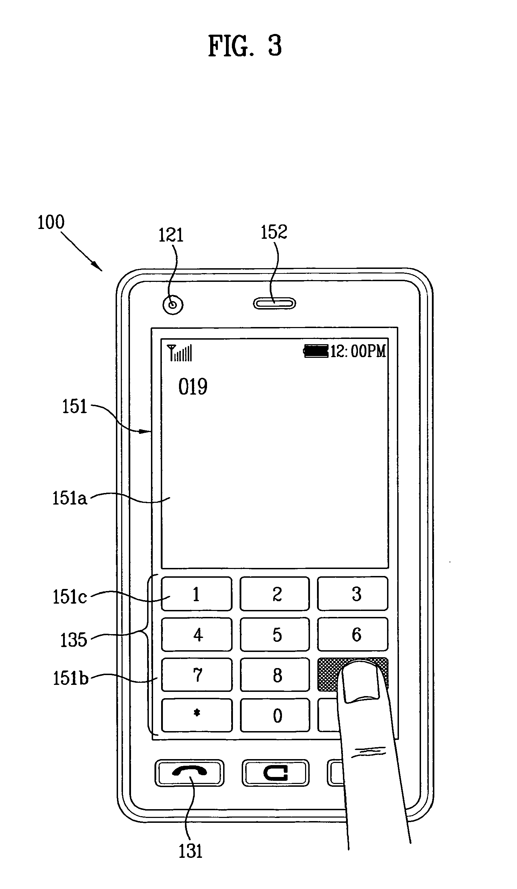

Figure 3 is a front-view diagram of a terminal according to one embodiment of the present disclosure for explaining an operational state thereof. Interconnected operational mechanism between the display 151 and the touchpad 135 are explained with reference to Figure 3 as follows.

First of all, various kinds of visual information can be displayed on the display 151. And, the information can be displayed in the form of characters, numerals, symbols, graphics, icons, and the like.

In order to input the information, at least one of the characters, numerals, symbols, graphics and/or icons may be represented as a single predetermined array to be implemented in a keypad formation. And, this keypad formation can be so-called 'soft keys.'

As illustrated in Figure 3, a touch input may be applied to a soft key on the front face of a terminal body. The display 151 may be operable through the entire area of the display surface or by being divided into a plurality of regions. In the latter case, a plurality of the regions can be configured interoperable.

For instance, an output window 151a (output display area) and an input window 151 b (input display area) may be displayed on the display 151. A soft key 151 c representing a digit for inputting a phone number, or the like, may be displayed in the input window 151 b. The input window 151 b may display a touchpad 135 that includes a various soft keys 151c. If the soft key 151c is touched, a digit corresponding to the touched soft key is outputted to the output window 151 a. If the first manipulating unit 131 is manipulated, a call connection for the phone number displayed on the output window 151 a may be attempted. It should be appreciated that the touchpad 135 may be provided as a mechanical keypad rather than displayed on the display.

Moreover, the display 151 or the touchpad 135 can be configured to receive a touch input by scrolling. A user may scroll the display 151 or the touchpad 135 to shift a cursor or pointer located at an entity (e.g., icon or the like) displayed on the display 151. Furthermore, in case that a finger is shifted on the display 151 or the touchpad 135, a path of the shifted finger can be visually displayed on the display 151. This may be useful in editing an image displayed on the display 151.

To cope with a case that both of the display (touch screen) 151 and the touchpad 135 are touched together within a predetermined time range, one function of the terminal can be executed. The above case of the simultaneous touch may correspond to a case that the terminal body is held by a user using a thumb and a first finger (clamping). The above function can include activation or deactivation for the display 151 or the touchpad 135.

For clarity and convenience of the following description, a mobile terminal mentioned in the following description is assumed as including at least one of the components shown in Figure 1. Meanwhile, such a graphic for pointing at a specific object on a display unit or selecting a menu from the display unit such as an arrow, a finger or the like is called a pointer or a cursor. Yet, the pointer is frequently used to mean a finger, a stylus pen, or the like, for a touch manipulation and the like. In order to clearly discriminate the pointer and the cursor from each other in this disclosure, a graphic displayed on a display unit is named a cursor and such a physical means for performing a touch, a proximity touch, a gesture and the like as a finger, a stylus pen and the like is named a pointer.

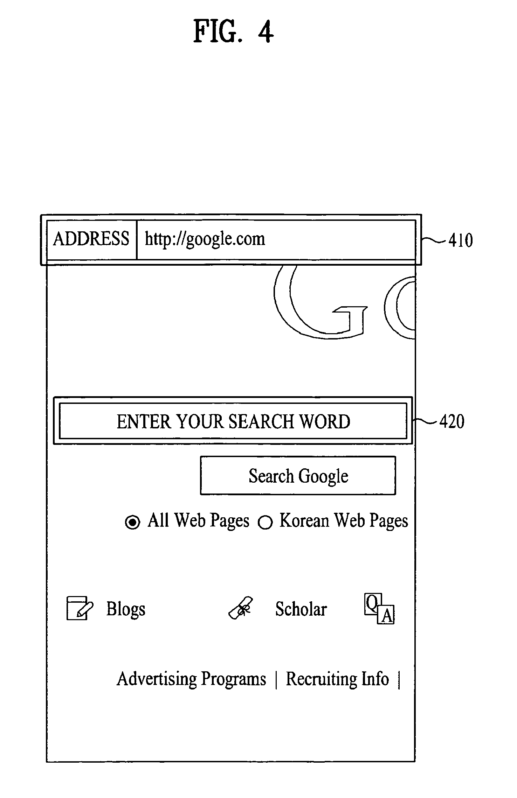

Figure 4 illustrates a display state diagram showing an exemplary format of a selected input window that is provided or displayed in a web browser according to the present disclosure.

Recently, with outstanding improvements in the performance of a processor of the mobile terminal, e.g., a controller 180 of the mobile terminal, the processor (e.g., controller 180) has become capable of performing highly advanced operations (or calculations). Also, with the enhancement in the performance of a wireless communication unit 110, high speed data communication has become available through diverse wireless interfaces. Accordingly, the quality of web surfing (e.g., web browsing) in a desktop computer environment has become equally available in mobile terminals. In other words, web browsing has become available in mobile terminals.

A variety of selected input windows (input fields) may be provided or displayed in a web browser. Herein, a selected input window may refer to an address-selected input window (e.g., address bar) for receiving a user input through a user input unit 130 or may refer to a selected input window of a web page that can be generated with an HTML code, such as an 'input' statement. Generally, objects, such as letters (or characters), numbers, symbols, and so on, may be inputted to the selected input window. However, in the description of the present disclosure, the object that can be inputted to the selected input window will mainly be referred to as an 'input string' for simplicity, while the input may also be referred as a search string, search query, input query, input, or the like. The selected input window that can be applied in the present disclosure will now be described in detail with reference to Figure 4.

Referring to Figure 4, a web browser application may be executed in the mobile terminal 100, thereby being displayed on the display unit 151. At this point, an address-selected input window 410 (address bar) is provided in the web browser. Herein, as a selected input window, the address of a web page that the user wishes to view (or visit) can be inputted in the address-selected input window 410, or the address of the current web page can be displayed in the address-selected input window 410. The address-selected input window 410 is provided in the web browser as a user interface (UI). And, generally, regardless of the type of the web page that is currently being displayed, the format or position of the address-selected input window may remain unchanged.

Then, as a portion of the web page, a selected input window 420 configured of a web programming language may be displayed on the web browser. Herein, a web programming language is a collective concept including hypertext markup language (HTML), JAVA, XML, CSS, ASP, and so on. However, simply for ease of description, in the description of the present disclosure it is assumed that HTML is used as the web programming language for simplicity. Generally, a selected input window configured of an HTML code is used as a search word selected input window of a search engine (or portal site) or as an ID/password selected input window of a web site requiring users to log-in (or sign-in).

Meanwhile, a drop down menu configured of an HTML code may also be considered as the selected input window mentioned in the description of the present disclosure. Herein, a drop down menu refers to a menu having a function of displaying a plurality of pre-inputted selectable lower level menus when the corresponding menu is selected. The drop down menu may also be referred to as a combo box.

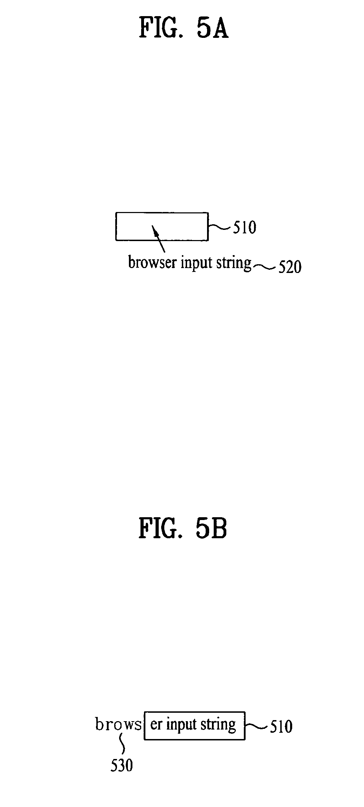

However, the above-described selected input window generally has a fixed size regardless of the length of the input string. More specifically, the size or length of an address selected input window may be determined based upon the settings of a web browser. And, the size or length of a selected input window configured of an HTML code may be set based upon the HTML code. In case an input string has a length longer than that of the selected input window, it may be difficult for the user to have a full view of the overall content of the inputted string. That is, a protion of the input string may not be visible. This will be described in detail with reference to Figures 5A to 5B.

Figures 5A to 5B illustrate a limited display of an input string due to a limited size of a selected input window according to the present disclosure. In the example shown in Figure 5A, it is assumed that an input string 520 ("browser input string") having a length longer than that of a selected input window 510 is sequentially inputted in the selected input window. In this case, as shown in Figure 5B, a portion 530 of the input string inputted beforehand is not displayed in the selected input window 510. Accordingly, in order to verify the portion inputted beforehand (e.g., the portion not visible), the user must apply a separate input such as moving the position of a cursor. Therefore, the present disclosure proposes a method for modifying the selected input window itself or a method for displaying additional information surrounding the selected input window for conveniently inputting and verifying input strings.

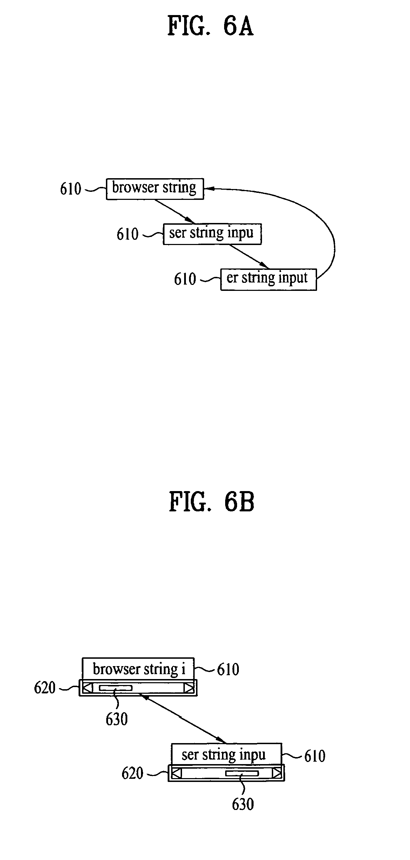

Figures 6A and 6B illustrate an exemplary method of verifying an input string, which exceeds the size of a selected input window, from the selected input window according to an embodiment of the present disclosure.

Simply for ease of explanation, it is assumed that the input string of Figure 6 is a "browser input string." As shown in Figure 6A, among the HTML tags, an effect of having the input string automatically scrolled to one direction within the selected input window may be repeatedly applied, such as a 'marquee' tag.

Also, as shown in Figure 6B, in case the input string is longer than the size of the selected input window, a scroll bar box 620 may be displayed. And, the displayed portion of input string in the selected input window may be modified by manipulating the displayed scroll bar box 620.

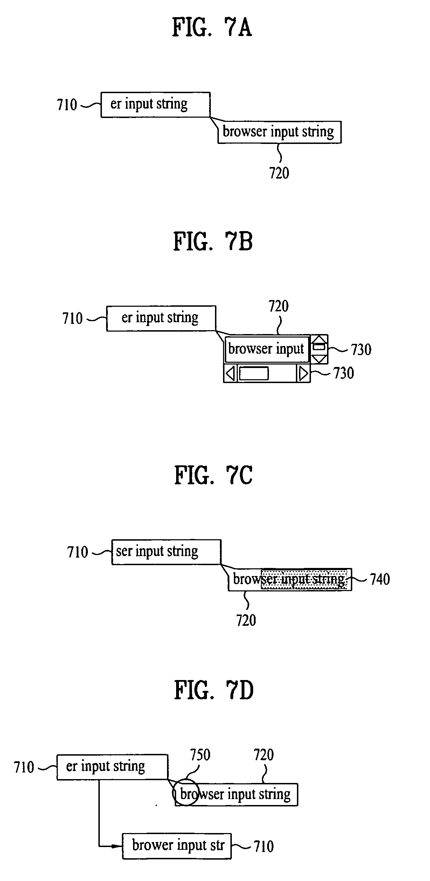

Figures 7A to 7D illustrate an exemplary method of verifying an input string, which exceeds the size of a selected input window, from the selected input window by using a pop-up window according to an embodiment of the present disclosure. In case the input string is longer than the size of a selected input window, a pop-up window may also be used, as shown in Figures 7A to 7D, wherein the pop-up window displays the input string in a predetermined format in the surrounding area of (or near) the selected input window.

It is also assumed in Figure 7 that the input string is a "browser input string." First of all, as shown in Figure 7A, a pop-up window 720 displaying the entire content of the input string is displayed near the selected input window 710. The size of the pop-up window 720 may vary in accordance with the length of the input string, so that the entire input string can be displayed in the pop-up window 720. If the size of the pop-up window 720 is required to be fixed, a scroll bar 730 can be additionally provided in the horizontal direction and/or the vertical direction of the pop-up window, as shown in Figure 7B.

In order to indicate (or display) which portion of the entire input string shown in the pop-up window 720 is currently being displayed in the selected input window 710, a predetermined visual effect 740 can be applied, as shown in Figure 7C. Alternatively, the highlighted portion may correspond to the portion of the input string which is not visible in the input window 710.

Meanwhile, among the entire input string being displayed in the pop-up window 720, in case the user selects a specific portion 750 of the input string, as shown in Figure 7D, the input string corresponding to the selected portion may be displayed in the selected input window 710 (e.g., a shortcut function). At this point, if a cursor indicating an input position within the selected input window 710 is being displayed, the cursor may also be moved to a position corresponding to the selected portion within the pop-up window. Here, a specific portion may be selected by using a method of manipulating a cursor having a predetermined format and being displayed on the display unit 151. For example, a cursor may be controlled by prescribed input keys to move the cursor on the display 151. Also, in case the display unit 151 is configured in the form of a touch screen, the user may select a specific portion by applying a touch input on the input string which the user wishes to select.

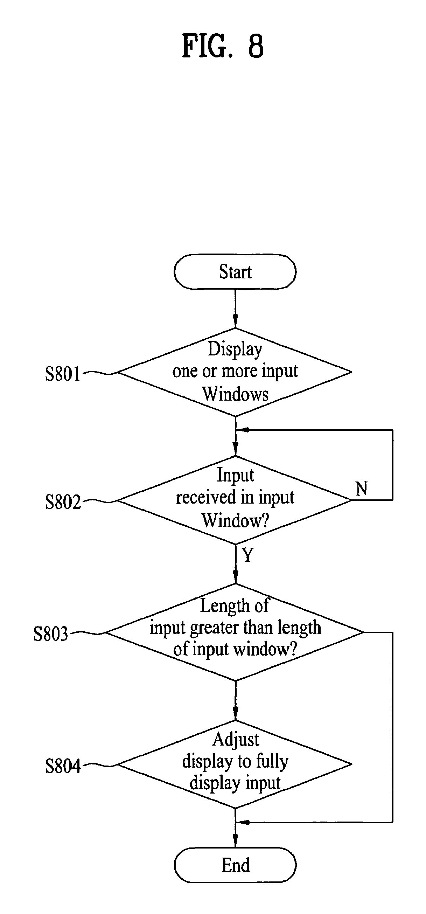

Figure 8 is a flowchart of a method of controlling the display according to one embodiment. As illustrated, the mobile terminal 100 may display one or more input windows 410, 420, 510, 610, 710 on the display 151, in step S801. The displayed input windows may be included in a webpage downloaded from a remote server. For example, the input windows may be an address bar 410 or a search string input field 420, as shown in Figure 4.

The controller 180 may determine whether an input is received in the displayed input windows, in step S802. If an input is detected, the controller 180 may determine whether the length of the input (e.g., length of a search string or address) is greater than a length of the selected input window, in step S803. When the length of the input is less than the length of the input window such that the input may be fully displayed in the input window, the input is displayed in the input window.

When the length of the input is greater than the length of the input window, the controller 180 may adjust the display of the input window and the input in order to fully display the input, in step 804. For example, the controller 180 may display a scroll bar 620 on the input window, as shown in Figure 6, in order to enable scrolling to view the inputted browser search string. The controller 180 may also display a pop-up window 720 in an area outside the input window, as shown in Figure 7, in order to fully display the inputted search string in the pop-up window 720. The pop-up window 720 may include a scroll bar 730 and/or highlights 740, and may also provide control functions to change the display of the input inside the input window 710.

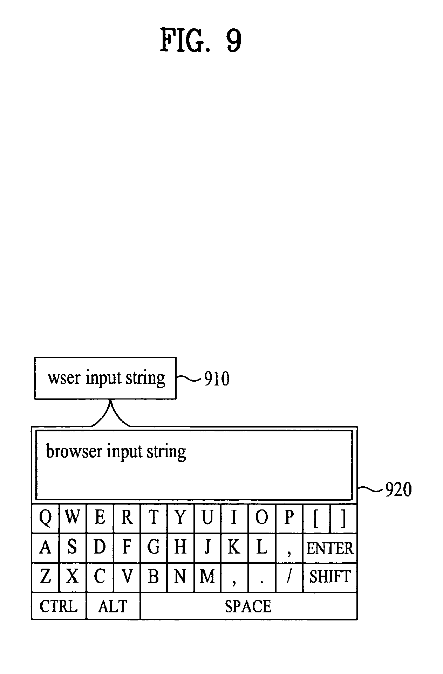

Figure 9 illustrates an exemplary format of a pop-up window including a virtual keypad for inputting an input string, which exceeds the size of a selected input window, to the selected input window according to an embodiment of the present disclosure.

Referring to Figure 9, a pop-up window 920 that includes a virtual keypad and an area, which may be positioned above the virtual keypad and which may display the inputted input string, may be displayed near the selected input window 910. Depending upon the user's selection (or choice) or the menu settings, the pop-up window 920 can be displayed in a full-screen display.

Moreover, the pop-up window 920 may be displayed below the input window 710, 910 as shown or positioned at any other position based on predetermined preference settings or based on available spacing as determined by the controller 180. Alternatively, the pop-up window 920 may be displayed at a predetermined position on the display (e.g., at the bottom portion of the display 151). In this case, the corresponding input window 910 may be highlighted, for example, to indicate that the pop-up window 920 corresponds to that input window 910.

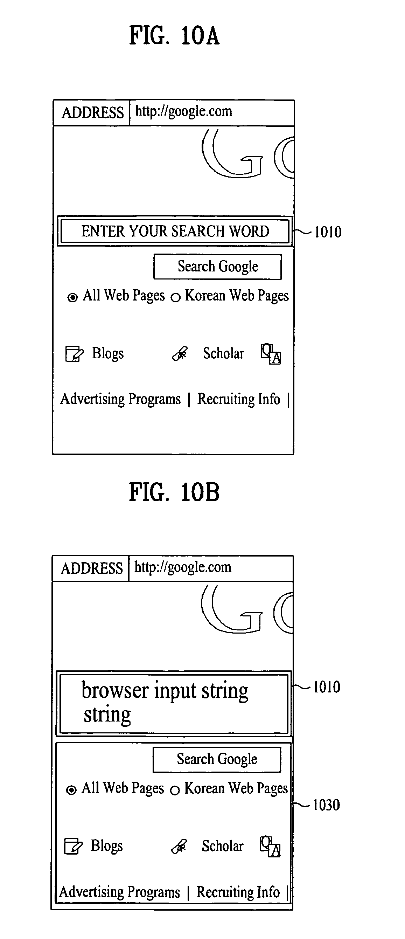

Figures 10A and 10B illustrate an exemplary method for changing the size of a selected input window according to an embodiment of the present disclosure.

Referring to Figure 10A, a portal site including a selected input window 1010, which may be configured of an HTML tag so as to receive an inputted search word, may be displayed on a web browser. At this point, if an input string exceeding the size of the selected input window 1010 is being inputted, as shown in Figure 10B, the size of the selected input window may be extended (or expanded) in accordance with the length of the input string. Accordingly, the position of a content 1030 corresponding to another web page positioned below the selected input window 1010 may also be varied with respect to the extension (or expansion) of the selected input window. Herein, even if the size of the selected input window is extended, the size of the input string (e.g., font size) within the extended (or expanded) selected input window may remain unchanged.

In certain embodiments, the controller 180 may determine whether the font size of the input string may be reduced to fully display the input string in the selected input window 1010. Here, if the font size can be reduced to a size greater than a prescribed minimum font size, the input string may be displayed with the smaller font size without resizing the selected input window 1010. Otherwise, if the font size necessary to fully display the entire search string would be too small (e.g., smaller than the prescribed minimum font size), then the selected input window 1010 may be resized as previously described. The minimum font size may be set by the user in the preferences or preset in the mobile terminal to a default value.

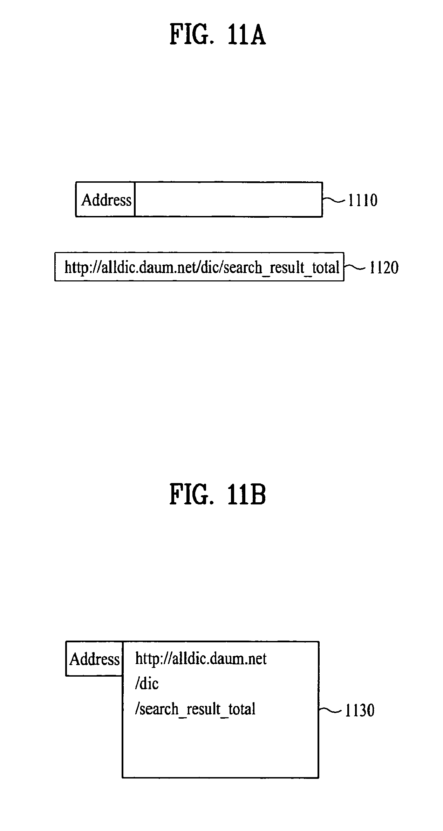

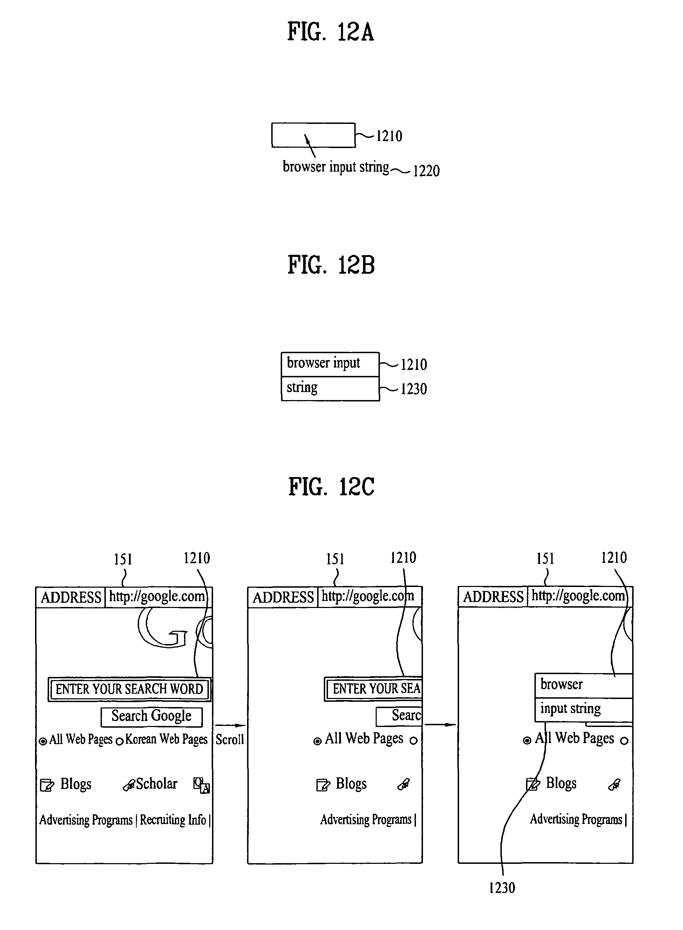

Meanwhile, the selected input window can be modified (or changed) by a line break in accordance with a predetermined condition. This will be described in detail with reference to Figure 11 and Figure 12.

Figure 11 illustrates an exemplary method for changing the size of a selected input window based upon a predetermined condition according to an embodiment of the present disclosure.

In Figure 11, it is assumed that the selected input window corresponds to an address selected input window of a web browser. And, it is also assumed in Figure 11 that the predetermined condition corresponds to a detection of a forward slash "/" included in the input string and that the size of the selected input window is modified (or changed) by a line break. Here, certain forward slash may be ignored, e.g., those included in "http://".

First of all, as shown in Figure 11A, a web page address 1120 that is longer than a predetermined size of an address selected input window 1110 is inputted to the address selected input window 1110 in the form of an input string. Accordingly, as shown in Figure 11B, a line break may be applied to an address selected input window 1130 each time a forward slash "/" is detected in the input string, thereby expanding the size of the corresponding address selected input window 1130. Thus, the user can have a full view of the entire address from the address selected input window having a limited size, and the user can also easily determine a hierarchy for each web directory.

The condition of detecting the forward slash "/" in the input string, which is assumed in Figure 11B, is merely exemplary. And, the present disclosure will not be limited to the example given herein. And, it will therefore be apparent that the corresponding condition may vary differently by anyone skilled in the art.

Figures 12A and 12B illustrate another exemplary method for changing the size of a selected input window based upon a predetermined condition according to an embodiment of the present disclosure.

In Figures 12A and 12B. it is assumed that the selected input window corresponds to a selected input window configured of an HTML tag of a web browser. And, it is also assumed that the length of the input string is longer than the horizontal length of the selected input window displayed in a web browser and that the size of the selected input window is modified (or changed) by a line break.

First of all, as shown in Figure 12A, an input string 1220 that is longer than a predetermined size of a selected input window 1210 (or search word selected input window) is inputted to the selected input window 1210. Accordingly, as shown in Figure 12B, the input string exceeding the horizontal length of the selected input window 1210 is displayed in a newly created area 1230 by a line break.

More specifically, as shown in Figure 12C, while a web browser is being executed and displayed on the display unit 151, the user may scroll the web browser screen resulting in a reduced the length of the search word selected input window 1210 which is displayed on the display unit 151. In this case, the condition of a line break is set to correspond to the length of the selected input window that is being displayed on the screen. Eventually, the length of the newly created area 1230, which is created due to the line break, may be set to not exceed the length of the selected input window that is being displayed on the current web browser.

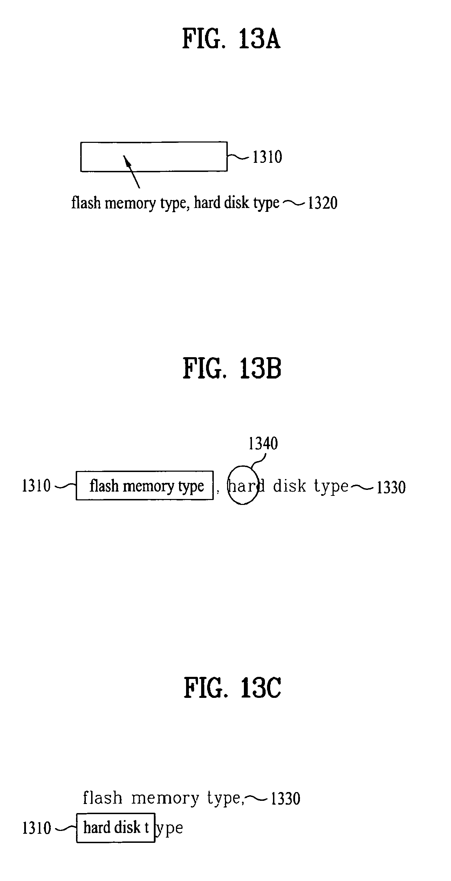

Figure 13 illustrates an exemplary method for displaying an input string according to an embodiment of the present disclosure. In case an input string exceeding the size of a selected input window is inputted to the corresponding selected input window, the remaining non-displayed portion of the input string that is displayed in the selected input window may be displayed near the corresponding selected input window in a predetermined format.

As shown in Figure 13A, it is assumed that an input string 1320 longer than a selected input window 1310 having a fixed size is inputted to the corresponding selected input window 1310. As shown in Figure 13B, when the corresponding input string 1320 is entirely inputted to the selected input window 1310, the user may manipulate a cursor or a navigation key so that a portion of the input string ("flash memory type") can be displayed in the selected input window 1310. In this case, the remaining portion 1330 of the overall input string 1320 may be displayed in the surrounding area of (or near) the selected input window 1310, in accordance with the before-after relation between the remaining portion 1330 and the portion of the input string actually being displayed in the selected input window 1310. At this point, a predetermined visual effect (e.g., a semi-transparent effect (i.e., Alpha blending)) can be applied to the remaining portion 1330 of the input string.

In the above-described state, when the user selects a specific portion 1340 of the remaining portion 1330 of the input string, a portion corresponding to the selected portion 1340 is displayed in the selected input window (e.g., an input cursor moves to the selected portion 1340), as shown in Figure 13C. Accordingly, based upon the before-after relation between the remaining portion 1330 of the selected portion 1340 with the selected portion 1340, the display formation of the remaining portion 1330 being positioned in the surrounding area of (or near) the selected input window 1310 can be modified (or changed).

The above-described modification in the format of the selected input window or the display of additional information in the surrounding area of (or near) a selected input window, such as a pop-up window or a string having Alpha blending applied thereto, may always be activated when the input string is longer than the input window, or may be activated only when the corresponding input window is selected (e.g., when a cursor indicating the current input position is displayed, or when the corresponding input window is standing-by to receive an input string). Furthermore, such effects may also be activated for a predetermined period of time when a specific key button (i.e., a virtual key button displayed on the touch screen or a hardware key button provided in an area of the main body of the mobile terminal) is manipulated. If the mobile terminal is provided with a sensing module 140 configured to sense any shaking movements in the main body of the mobile terminal, the control unit 180 may control the above-described effects to be activated when the sensing module 140 senses shaking movements having a predetermined pattern.

A mobile terminal and a method for controlling the same as broadly disclosed and embodied herein may substantially obviate one or more problems due to limitations and disadvantages of the related art. One object of the present disclosure is to provide a mobile terminal and a method for controlling the same that can enable the user to conveniently input and verify data through various types of input windows provided in a web browser.

To achieve these objects and other advantages and in accordance with the purpose of the disclosure, as embodied and broadly described herein, a mobile terminal may include a display unit, a wireless communication unit configured to transmit and receive data to and from an external device via wireless communication, a user input unit configured to receive a command from a user, and, when a web browser including at least one or more input windows is displayed on the display unit, and when an input window having a first length is selected, among the at least one or more input windows, through the user input unit, and when a string having a second length is inputted to the selected input window, the second length being longer than the first length, a controller configured to enlarge the selected input window or to display the string in a predetermined format in a surrounding area of the selected input window, so that the inputted string can be fully displayed.

In one embodiment of the present disclosure, a method for controlling a mobile terminal may include the steps of executing a web browser including at least one or more input windows, selecting an input window having a first length, among the at least one or more input windows, through a user input unit, and determining whether a string having a second length is being inputted to the selected input window, wherein the second length is longer than the first length, and, when a string having a second length longer than the first length is being inputted, expanding the selected input window so that the inputted string can be fully displayed or displaying the string in a predetermined format in a surrounding area of the selected input window.

As embodied and broadly disclosed herein, a mobile terminal may include a wireless communication interface for retrieving web content, a display for displaying a web browser that includes at least one input windows, an input device that receives an input string for input in the at least one input window, and a controller configured to adjust a display of the input string input to fully display the input string. The controller may determine a length of the at least one input window and the input string, and if the length of the input string is greater than the length of the at least one input window, the controller may increase the length of the at least one input window or generate a display of the input string in an area outside of the selected input window.

In this embodiment, the input window is at least one of a web browser address bar, an input field configured through a web programming language, or a drop down menu. The input string may include a prescribed character, and the controller may generate a line break in the display of the selected input window each time the prescribed character is detected in the input string.

Moreover, the controller may generate the display of the input string in an area outside of the input window by generating a pop-up window adjacent to the input window for fully displaying the input string. The pop-up window may have a prescribed length and, when the length of the input string is greater than the length of the pop-up window, the controller may generate a line break in the input string displayed in the pop-up window. The pop-up window may have a prescribed length and, when the length of the input string is greater than the length of the pop-up window, the controller may generate at least one scroll bar on the pop-up window. A display area within the pop-up window may be adjustable by an input received through the input device.

In this embodiment, the controller may apply a predetermined visual effect to a portion of the input string displayed in the pop-up window that corresponds to a portion of the input string that is displayed in the input window. When a portion of the input string in the pop-up window is selected, the controller may control the display of the input string in the input window to correspond to the selected portion of the input string in the pop-up window. Moreover, a first portion of the input string may be displayed in the input window based on the lengths of the input string and the input window and a second portion of the input string which is not displayed in the input window may be displayed in a surrounding area of the input window.

The controller may perform Alpha blending to apply a semi-transparent effect to the second portion of the input string. The controller may position the second portion of the input string so that the first portion is positioned relative to the second portion in accordance with a respective input order. Within the second portion of the input string, when a third portion is selected through the user input deice, the controller may control the third portion of the input string to be displayed in the input window and may control a fourth portion of the input string to be positioned in a surrounding area of the input window, the fourth portion excluding the third string portion of the input string.

The controller may adjust the display of the input string in the input window only when the input window is in a prescribed state. A sensor may be provided to detect movements of the mobile terminal, such that the controller may control the input window to be in the prescribed state when the sensor detects movements having a predetermined pattern. The input device may include at least one of a touch screen for displaying virtual key buttons or hardware key buttons, wherein the controller controls the input window to be in the prescribed state when the at least one of the virtual key buttons or the hardware key buttons are manipulated.

In one embodiment, a method for controlling a mobile terminal may include displaying a web browser including at least one or more input windows, receiving a selection input for selecting an input window having a first length among the at least one or more input windows, determining whether a string having a second length is being inputted to the selected input window, wherein the second length is longer than the first length, and when the string having the second length longer than the first length is being inputted, expanding the selected input window so that the inputted string is fully displayed or displaying the string in a predetermined format in a surrounding area of the selected input window.

In one embodiment, a mobile terminal as embodied and broadly disclosed herein may include a display for displaying at least one input field, and a controller configured to control a display of an input string input into the at least one input field. The controller may determine whether a length of the input string is greater than a length of the at least one input field, and may control the display of the input string to fully display the input string when the length of the input string is greater than the length of the at least one input field.

In this embodiment, the controller may increase a size of the at least one input field based on the length of the input string such that the input string is fully displayed in the at least one input field. The controller may control the display to display at least one of a pop-up window, a scroll bar, or an enlarged input field adjacent to the at least one input field to fully display the input string. The at least one input field may be at least one of an address bar, a text field, or a drop-down menu displayed in a webpage.

Furthermore, according to the embodiment of the present disclosure, the above-described method may be realized in a medium having a program recorded therein by using a code that can be read by a processor. Exemplary media that can be read by the processor may include ROMs, RAMs, CD-ROMs, magnetic tapes, floppy disks, optical data storage devices, and so on. And, media that are realized in the form of a carrier wave (i.e., transmission via Internet) may also be included herein.

Any reference in this specification to "one embodiment," "an embodiment," "example embodiment," etc., means that a particular feature, structure, or characteristic described in connection with the embodiment is included in at least one embodiment of the disclosure. The appearances of such phrases in various places in the specification are not necessarily all referring to the same embodiment. Further, when a particular feature, structure, or characteristic is described in connection with any embodiment, it is submitted that it is within the purview of one skilled in the art to effect such feature, structure, or characteristic in connection with other ones of the embodiments.

Although embodiments have been described with reference to a number of illustrative embodiments thereof, it should be understood that numerous other modifications and embodiments can be devised by those skilled in the art that will fall within the principles of this disclosure. More particularly, various variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

## Claims

1. A mobile terminal(100), comprising:
a wireless communication interface(110) for retrieving web content;
a display(151) for displaying at least one input window;
an input device(130) that receives an input string for input in the at least one input window; and
a controller(180) **characterized in that** the controller is configured to adjust a display of the input string input to fully display the input string, wherein
the controller determines a length of the at least one input window and the input string, and if the length of the input string is greater than the length of the at least one input window, the controller increases the length of the at least one input window or generates a display of the input string in an area outside of the selected input window.

2. The mobile terminal of claim 1, wherein the input window is at least one of a browser address bar, an input field configured through a programming language, or a drop down menu.

3. The mobile terminal of claim 1, wherein the input string includes a prescribed character, and the controller generates a line break in the display of the selected input window each time the prescribed character is detected in the input string.

4. The mobile terminal of any one of claims 1 to 3, wherein the controller generates the display of the input string in an area outside of the input window by generating a pop-up window adjacent to the input window for fully displaying the input string.

5. The mobile terminal of claim 4, wherein the pop-up window has a prescribed length and, when the length of the input string is greater than the length of the pop-up window, the controller generates a line break in the input string displayed in the pop-up window.

6. The mobile terminal of claim 4, wherein the pop-up window has a prescribed length and, when the length of the input string is greater than the length of the pop-up window, the controller generates at least one scroll bar on the pop-up window, and wherein a display area within the pop-up window is adjustable by an input received through the input device.

7. The mobile terminal of claim 4, wherein the controller applies a predetermined visual effect to a portion of the input string displayed in the pop-up window that corresponds to a portion of the input string that is displayed in the input window.

8. The mobile terminal of claim 7, wherein, when a portion of the input string in the pop-up window is selected, the controller controls the display of the input string in the input window to correspond to the selected portion of the input string in the pop-up window.

9. The mobile terminal of any one of claims 1 to 3, wherein a first portion of the input string is displayed in the input window based on the lengths of the input string and the input window and a second portion of the input string which is not displayed in the input window is displayed in a surrounding area of the input window.

10. The mobile terminal of claim 9, wherein the controller performs Alpha blending to apply a semi-transparent effect to the second portion of the input string.

11. The mobile terminal of claim 9, wherein the controller positions the second portion of the input string so that the first portion is positioned relative to the second portion in accordance with a respective input order.

12. The mobile terminal of claim 9, wherein, within the second portion of the input string, when a third portion is selected through the user input deice, the controller controls the third portion of the input string to be displayed in the input window and controls a fourth portion of the input string to be positioned in a surrounding area of the input window, the fourth portion excluding the third string portion of the input string.

13. The mobile terminal of any one of claims 1 to 12, wherein the controller adjusts the display of the input string in the input window only when the input window is in a prescribed state.

14. The mobile terminal of claim 13, wherein the input device comprises at least one of a touch screen for displaying virtual key buttons or hardware key buttons, wherein the controller controls the input window to be in the prescribed state when the at least one of the virtual key buttons or the hardware key buttons are manipulated.

15. A method for controlling a mobile terminal, the method comprising:
displaying at least one or more input windows(S801);
receiving a selection input for selecting an input window having a first length among the at least one or more input windows(S802);
determining whether a string having a second length is being inputted to the selected input window, wherein the second length is longer than the first length(S803); and
when the string having the second length longer than the first length is being inputted, expanding the selected input window so that the inputted string is fully displayed or displaying the string in a predetermined format in a surrounding area of the selected input window(S804).
